(19) Europäisches Patentamt
European Patent Office
Office européen des brevets

(11) **EP 3 639 011 B1**

(12) **FASCICULE DE BREVET EUROPEEN**

(45) Date de publication et mention
de la délivrance du brevet:
**26.10.2022 Bulletin 2022/43**

(21) Numéro de dépôt: **18732045.2**

(22) Date de dépôt: **14.06.2018**

(51) Classification Internationale des Brevets (IPC):
**G01N 21/3504** $^{(2014.01)}$    **G01N 21/31** $^{(2006.01)}$
**G01N 21/27** $^{(2006.01)}$

(52) Classification Coopérative des Brevets (CPC):
**G01N 21/3504; G01N 21/314;** G01N 21/274

(86) Numéro de dépôt international:
**PCT/EP2018/065907**

(87) Numéro de publication internationale:
**WO 2018/229239 (20.12.2018 Gazette 2018/51)**

(54) **PROCÉDÉ D'ESTIMATION D'UNE QUANTITÉ D'UNE ESPÈCE GAZEUSE**

VERFAHREN ZUR SCHÄTZUNG EINER MENGE EINES GASFÖRMIGEN STOFFES

METHOD FOR ESTIMATING A QUANTITY OF A GASEOUS SPECIES

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.06.2017 FR 1755429**

(43) Date de publication de la demande:
**22.04.2020 Bulletin 2020/17**

(73) Titulaire: **Elichens
38000 Grenoble (FR)**

(72) Inventeurs:
• **MAYOUE, Aur lien
91450 Soisy-Sur-Seine (FR)**
• **BELAFDIL, Chakib
84000 Avignon (FR)**

(74) Mandataire: **Le Goaller, Christophe
Innovation Competence Group
310 avenue Berthelot
69372 Lyon Cedex 08 (FR)**

(56) Documents cités:
**EP-A2- 1 408 325     WO-A1-2016/145066**

• **WEI-LIN YE ET AL: "Design and performances of
a mid-infrared CH4 detection device with novel
three-channel-based LS-FTF self-adaptive
denoising structure", SENSORS AND
ACTUATORS B: CHEMICAL: INTERNATIONAL
JOURNAL DEVOTED TO RESEARCH AND
DEVELOPMENT OF PHYSICAL AND CHEMICAL
TRANSDUCERS, vol. 155, no. 1, 1 juillet 2011
(2011-07-01), pages 37-45, XP055444195, NL
ISSN: 0925-4005, DOI: 10.1016/j.snb.2010.11.018
cité dans la demande**

**Description**

## DOMAINE TECHNIQUE

Le domaine technique de l'invention est l'utilisation d'une source de lumière, en particulier de type corps noir ou corps gris, pour effectuer des mesures optiques, avec une prise en compte d'une dérive temporelle affectant le rayonnement lumineux émis par la source de lumière.

## ART ANTERIEUR

Le recours à des méthodes optiques pour l'analyse d'un gaz est fréquent. Des dispositifs permettent de déterminer la composition d'un gaz en se basant sur le fait que les espèces composant le gaz présentent des propriétés spectrales d'absorption différentes les unes des autres. Ainsi, connaissant une bande spectrale d'absorption d'une espèce gazeuse, sa concentration peut être déterminée par une estimation de l'absorption de la lumière traversant le gaz, en utilisant la loi de Beer Lambert. Ce principe permet une estimation de la concentration d'une espèce gazeuse présente dans le gaz.

La source de lumière est usuellement une source émettant dans l'infrarouge, la méthode utilisée étant usuellement désignée par le terme anglosaxon "NDIR detection", l'acronyme NDIR signifiant Non Dispersive Infra-Red. Un tel principe a été fréquemment mis en œuvre, et est par exemple décrit dans les documents US5026992 ou WO2007064370.

Selon les procédés les plus courants, le gaz analysé s'étend entre une source de lumière et un photodétecteur, dit photodétecteur de mesure, ce dernier étant destiné à mesurer une onde lumineuse transmise par le gaz à analyser, l'onde lumineuse étant partiellement absorbée par ce dernier. Les procédés comprennent généralement une mesure d'une onde lumineuse, dite onde lumineuse de référence, émise par la source, l'onde lumineuse de référence étant non absorbée, ou absorbée de façon négligeable, par le gaz analysé.

La comparaison entre l'onde lumineuse en présence de gaz et l'onde lumineuse sans gaz permet de caractériser l'absorption du gaz. Il s'agit par exemple de déterminer une quantité d'une espèce gazeuse dans le gaz, selon la technologie désignée par le terme "NDIR par absorption". Il peut également s'agir d'estimer une quantité de particules dans le gaz, en détectant une lumière diffusée par ce dernier selon une plage angulaire de diffusion prédéterminée.

L'onde lumineuse de référence est mesurée par un photodétecteur de référence. Il peut s'agir d'un photodétecteur de référence différent du photodétecteur de mesure, et agencé de façon à être disposé face à la source de lumière, le photodétecteur de référence étant associé à un filtre optique de référence. Le filtre optique de référence définit une bande spectrale de référence, dans laquelle le gaz à analyser ne présente pas d'absorption significative. La publication Wei-Lin Ye et al "Design and performances of a mid-infrared CH4 détection device with novel three-channel-based LS-FTF self-adaptative denoising structure", Sensors and actuators B: Chemical, volume 155, issue 1, décrit un tel procédé. Dans cette publication, on décrit un algorithme de débruitage d'un signal émis par le photodétecteur de référence. L'algorithme de débruitage est également appliqué au signal résultant du photodétecteur de mesure.

Les inventeurs ont proposé un perfectionnement aux procédés ou dispositifs existants. En effet, le photodétecteur de référence est fréquemment affecté d'un bruit de mesure, impactant l'estimation de l'intensité de l'onde lumineuse de référence. C'est notamment le cas lorsque le photodétecteur de référence est un photodétecteur simple et peu couteux. Un tel bruit peut entraîner une incertitude sur les quantités estimées. L'invention vise à réduire cette incertitude, en limitant l'effet des fluctuations affectant les mesures réalisées par le photodétecteur de référence.

## EXPOSE DE L'INVENTION

Un premier objet de l'invention est un procédé de mesure d'une quantité d'une espèce gazeuse présente dans un gaz, l'espèce gazeuse étant apte à absorber une lumière dans une bande spectrale d'absorption , le procédé comportant les étapes suivantes :

a) disposition du gaz entre une source de lumière et un photodétecteur de mesure, la source de lumière étant apte à émettre une onde lumineuse incidente, l'onde lumineuse incidente se propageant à travers le gaz vers le photodétecteur de mesure, le photodétecteur de mesure étant apte à détecter une onde lumineuse transmise par le gaz, dans la bande spectrale d'absorption ;
b) illumination du gaz par la source de lumière ;
c) mesure, par le photodétecteur de mesure, d'une intensité, dite intensité de mesure, de l'onde lumineuse transmise par le gaz, dans la bande spectrale d'absorption ;
d) mesure, par un photodétecteur de référence, d'une intensité, dite intensité de référence, d'une onde lumineuse dite de référence, l'onde lumineuse de référence étant émise par la source de lumière ;

les étapes b) à d) étant mises en œuvre à une pluralité d'instants de mesure, le procédé comportant également les étapes suivantes :

> e) correction de l'intensité de référence détectée aux différents instants de mesure ;
> f) estimation d'une quantité de l'espèce gazeuse, aux différents instants de mesure, à partir de l'intensité de référence corrigée et de l'intensité de mesure ;

le procédé étant caractérisé en ce que l'étape e) comporte les sous-étapes suivantes :

> ei) prise en compte d'un modèle paramétrique, défini selon des paramètres, décrivant une évolution temporelle de l'intensité de référence détectée aux différents instants de mesure;
> eii) estimation des paramètres du modèle à l'aide des intensités de référence mesurées aux différents instants de mesure ;
> eiii) estimation d'une intensité de référence dite débruitée à chaque instant de mesure en fonction des paramètres du modèle estimés.

L'onde lumineuse de référence est représentative d'une onde lumineuse atteignant le photodétecteur de mesure sans avoir été absorbée par le gaz. Elle s'étend selon une bande spectrale de référence. Selon les configurations, la bande spectrale de référence peut être distincte ou confondue avec la bande spectrale d'absorption.

Lors de l'étape ei), le modèle pris en compte peut notamment être un modèle linéaire, l'étape eii) formant une régression linéaire.

Selon un mode de réalisation, les étapes b) à d) sont réalisées à différents instants de mesure formant une plage temporelle, et, suite à ces instants de mesure :

- lors de la sous-étape ei), le modèle est déterminé pour la plage temporelle;
- lors de la sous-étape eii), les paramètres du modèle sont estimés à l'aide de mesures de référence effectuées durant ladite plage temporelle ;
- lors de la sous-étape eiii), la correction de l'intensité lumineuse de référence est réalisée pour les instants de mesure de la plage temporelle.

Selon ce mode de réalisation, lors de la sous-étape eii) chaque instant de la plage temporelle peut être affecté un terme de pondération strictement positif et inférieur ou égal à 1.

Selon un autre mode de réalisation, les sous-étapes eii) et eiii) sont mises en œuvre à chaque instant de mesure, de façon itérative, les paramètres du modèle étant mis à jour en fonction de paramètres du modèle résultant d'une itération précédente, ou, lors du premier instant de mesure, en fonction de paramètres initialisés. Selon ce mode de réalisation, les étapes e) et f) peuvent être mises en œuvre à chaque instant de mesure. La sous-étape eii), peut prendre en compte un facteur d'oubli pour pondérer la prise en compte de l'itération précédente.

Le modèle peut comporter un terme de pondération strictement positif et inférieur ou égal à 1. Quel que soit le mode de réalisation, l'étape f) peut comprendre les sous-étapes suivantes :

> fi) à partir de l'intensité de référence corrigée, à chaque instant de mesure, estimation d'une intensité de l'onde lumineuse émise par la source de lumière, dans la bande spectrale d'absorption, audit instant de mesure ;
> fii) comparaison de l'intensité ainsi estimée avec l'intensité de mesure résultant de l'étape c), audit instant de mesure ;
> fiii) estimation de la quantité de l'espèce gazeuse en fonction de la comparaison réalisée lors de la sous-étape fii). Cette comparaison peut prendre la forme d'un ratio.

Un autre objet de l'invention est un dispositif pour déterminer une quantité d'une espèce gazeuse dans un gaz, le dispositif comportant :

- une source lumineuse arrangée pour émettre une onde lumineuse incidente se propageant vers le gaz, l'onde lumineuse incidente s'étendant selon une bande spectrale d'absorption de l'espèce gazeuse;
- un photodétecteur de mesure, configuré pour détecter une onde lumineuse transmise par le gaz, à différents instants de mesure, et à en mesurer une intensité, dite intensité de mesure;
- un photodétecteur de référence, configuré pour mesurer une intensité, dite intensité de référence, d'une onde lumineuse de référence émise par la source de lumière, aux différents instants de mesure;
- un premier processeur, configuré pour calculer une intensité de référence corrigée aux différents instants de mesure, à partir de l'intensité de référence mesurée par le photodétecteur de référence auxdits instants de mesure, le premier processeur étant configuré pour mettre en œuvre l'étape e) comportant les sous-étapes ei) à eiii) du procédé selon le premier objet de l'invention ;

- un deuxième processeur configuré pour estimer la quantité de l'espèce gazeuse, à chaque instant de mesure, en fonction de l'intensité de référence corrigée et de l'intensité de mesure. Le deuxième processeur peut notamment être configuré pour mettre œuvre l'étape f) du procédé selon le premier objet de l'invention.

Le premier et le deuxième processeurs peuvent être confondus et former un même processeur. D'autres avantages et caractéristiques ressortiront plus clairement de la description qui va suivre de modes particuliers de réalisation de l'invention, donnés à titre d'exemples non limitatifs, et représentés sur les figures listées ci-dessous.

## FIGURES

La figure 1 représente un dispositif permettant la mise en œuvre de l'invention.
Les figures 2A et 2B illustrent respectivement une évolution d'intensités lumineuses de référence et d'intensités lumineuses de mesure mesurées respectivement par un photodétecteur de référence et un photodétecteur de mesure d'un dispositif, tel que représenté sur la figure 1, selon différentes configurations.
La figure 2C représente un détail de la figure 2B.
La figure 3 représente un exemple de correction de l'intensité lumineuse émise par la source de lumière.
Les figures 4A et 4B représentent les principales étapes d'un mode de réalisation de l'invention.
Les figures 4C et 4D représentent les principales étapes d'un autre mode de réalisation de l'invention.
Les figures 5A, 5B et 5C représentent des estimations dites débruitées d'intensités de référence, mesurées par un photodétecteur de référence, respectivement selon trois modes de réalisations.

## EXPOSE DE MODES DE REALISATION PARTICULIERS

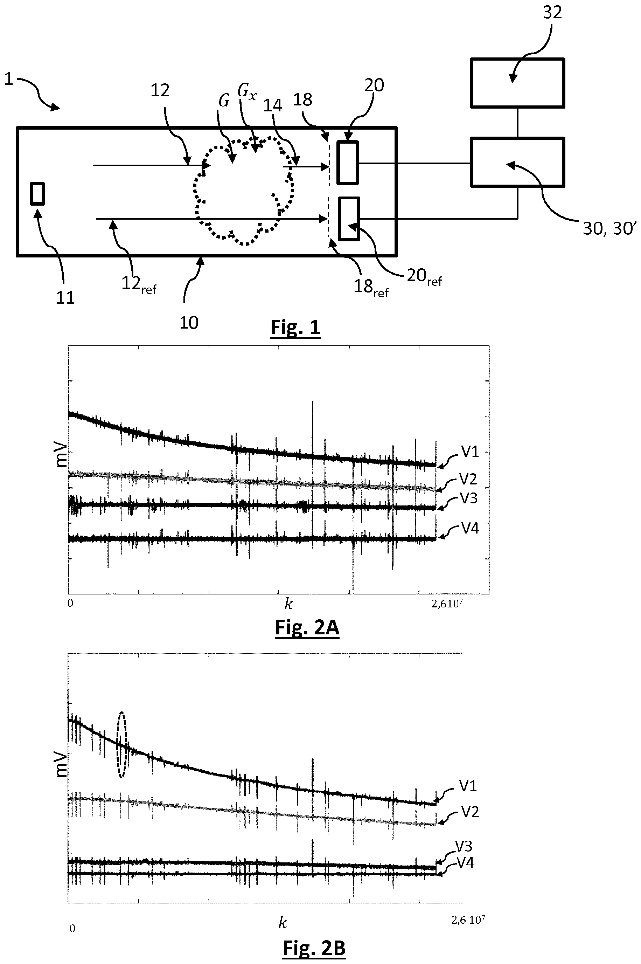

La figure 1 est un exemple d'un dispositif d'analyse 1 de gaz. Ce dispositif comporte une enceinte 10 définissant un espace interne à l'intérieur duquel se trouvent :

- une source de lumière 11, apte à émettre une onde lumineuse 12, dite onde lumineuse incidente, de façon à illuminer un gaz G s'étendant dans l'espace interne;
- un photodétecteur 20, dit photodétecteur de mesure, apte à détecter une onde lumineuse 14 transmise par le gaz G, sous l'effet de l'illumination de ce dernier par l'onde lumineuse incidente 12. L'onde lumineuse 14 est désignée par le terme onde lumineuse de mesure.

Le gaz G comporte une espèce gazeuse $G_x$ dont on cherche à déterminer une quantité $c_x(k)$, par exemple une concentration, à un instant de mesure $k$. Cette espèce gazeuse absorbe une part mesurable de la lumière dans une bande spectrale d'absorption $\Delta_x$.
La source de lumière 11 est apte à émettre l'onde lumineuse incidente 12, selon une bande spectrale d'illumination $\Delta$, cette dernière pouvant s'étendre entre le proche ultraviolet et l'infrarouge moyen, entre 200 nm et 10 $\mu$m, et le plus souvent entre 1 $\mu$m et 10 $\mu$m. La bande spectrale d'absorption $\Delta_x$ de l'espèce gazeuse analysée est comprise dans la bande spectrale d'illumination $\Delta$. La source de lumière 11 peut notamment être impulsionnelle, l'onde lumineuse incidente 12 étant une impulsion de durée généralement comprise entre 100 ms et 1 s. La source de lumière 11 peut notamment être une source de lumière de type filament suspendu et chauffé à une température comprise entre 400°C et 800°C. Le photodétecteur de mesure 20 est de préférence associé à un filtre optique 18, définissant une bande spectrale de détection englobant tout ou partie de la bande spectrale d'absorption $\Delta_x$ de l'espèce gazeuse.
Dans l'exemple considéré, le photodétecteur de mesure 20 est une thermopile, apte à délivrer un signal dépendant de l'intensité de l'onde lumineuse à laquelle est exposé le photodétecteur. Il peut également s'agir d'une photodiode ou d'un autre type de photodétecteur.
L'intensité $I(k)$ de l'onde lumineuse 14 détectée par le photodétecteur de mesure 20, dite intensité de mesure, à un instant de mesure $k$, dépend de la quantité $c_x(k)$ audit instant de mesure, selon la relation de Beer Lambert :

$$att(k) = \frac{I(k)}{I_x(k)} = e^{-\mu(c_x(k))l} \quad (1)$$

où :

- $\mu(c_x(k))$ est un coefficient atténuation, dépendant de la quantité $c_x(k)$ à l'instant $k$;
- $l$ est l'épaisseur de gaz traversé par l'onde lumineuse dans l'enceinte 10;
- $I_x(k)$ est l'intensité de l'onde lumineuse incidente, à l'instant $k$, qui correspond à l'intensité de l'onde lumineuse, dans la bande spectrale d'absorption $\Delta_x$ atteignant le photodétecteur de mesure 20 en l'absence de gaz absorbant dans l'enceinte.

La comparaison entre $I(k)$ et $I_x(k)$, prenant la forme d'un ratio $\frac{I(k)}{I_x(k)}$, correspond à une atténuation $att(k)$ générée par l'espèce gazeuse considérée à l'instant $k$.

Lors de chaque impulsion de la source de lumière 11, on peut ainsi déterminer $\mu(c_x(k))$, ce qui permet d'estimer $c_x(k)$ sachant que la relation entre $c_x(k)$ et $\mu(c_x(k))$ est connue.

L'expression (1) suppose une maîtrise de l'intensité $I_x(k)$ de l'onde lumineuse incidente 12 à l'instant de mesure $k$. Or, il est connu que l'émissivité des sources de lumière, de type corps noir et corps gris, varie avec le temps, et peut notamment subir une décroissance. Afin de prendre en compte cette variation temporelle de l'émission de la source de lumière 11, le dispositif comporte un photodétecteur de référence $20_{ref}$, agencé de telle sorte qu'il détecte une onde lumineuse, dite onde lumineuse de référence $12_{ref}$, représentative de l'onde lumineuse incidente 12 émise par la source de lumière 11. L'onde lumineuse de référence $12_{rel}$ atteint le photodétecteur de référence $20_{ref}$ sans interagir avec le gaz G, ou sans interagir significativement avec ce dernier. L'intensité de l'onde lumineuse de référence $12_{ref}$, détectée par le photodétecteur de référence $20_{ref}$, à l'instant de mesure $k$, est désignée par le terme intensité de référence $I_{ref}(k)$. L'onde lumineuse de référence s'étend dans une bande spectrale de référence $\Delta_{ref}$.

Dans cet exemple, le photodétecteur de référence $20_{ref}$ est disposé à côté du photodétecteur de mesure 20 et est de même type que ce dernier. Il est associé à un filtre optique, dit filtre optique de référence $18_{ref}$. Le filtre optique de référence $18_{ref}$ définit la bande spectrale de référence $\Delta_{ref}$ correspondant à une plage de longueurs d'onde non absorbées par l'espèce gazeuse considérée. La bande passante de référence $\Delta_{ref}$ est par exemple centrée autour de la longueur d'onde 3.91 μm.

Différentes configurations, connues de l'art antérieur, peuvent également être envisagées, en particulier les variantes selon lesquelles :

- le photodétecteur de référence $20_{ref}$ est disposé dans une enceinte isolée du gaz à analyser ; dans ce cas, la bande spectrale de référence $\Delta_{ref}$ peut être confondue avec la bande spectrale d'absorption $\Delta_x$.
- le photodétecteur de référence $20_{ref}$ est confondu avec le photodétecteur de mesure 20, un moyen d'ajustement de filtre permettant d'associer le photodétecteur alternativement au filtre de mesure 18 et au filtre de référence $18_{ref}$. Il peut par exemple s'agir d'une roue à filtres. Lorsque le photodétecteur de référence est confondu avec le photodétecteur de mesure, la bande spectrale de référence $\Delta_{ref}$ est de préférence distincte de la bande spectrale d'absorption $\Delta_x$.

Dans les dispositifs de l'art antérieur, la mesure de $I_{ref}(k)$ permet d'utiliser l'expression (1) en estimant $I_x(k)$ à partir de $I_{ref}(k)$ ce qui permet de déterminer $\mu(c_x(k))$, puis d'estimer $c_x(k)$.

Le photodétecteur de référence $20_{ref}$ peut être affecté d'un bruit de lecture important, impactant la précision de la détermination de l'intensité de référence $I_{ref}(k)$. L'intensité de référence est ainsi soumise à des fluctuations statistiques, ce qui se traduit par une incertitude de mesure élevée impactant l'estimation de la quantité $c_x(k)$ de l'espèce gazeuse. L'invention adresse ce problème, en corrigeant l'intensité de référence $I_{ref}(k)$ mesurée à chaque instant de mesure. Plus précisément, la correction consiste à remplacer l'intensité de référence $I_{ref}(k)$, mesurée à chaque instant de mesure, par une estimation $I'_{ref}(k)$ dite débruitée de l'intensité de référence. Par débruitée, on entend moins soumise à des fluctuations que l'intensité de référence mesurée par le photodétecteur de référence. $I'_{ref}(k)$ correspond à l'intensité de référence corrigée.

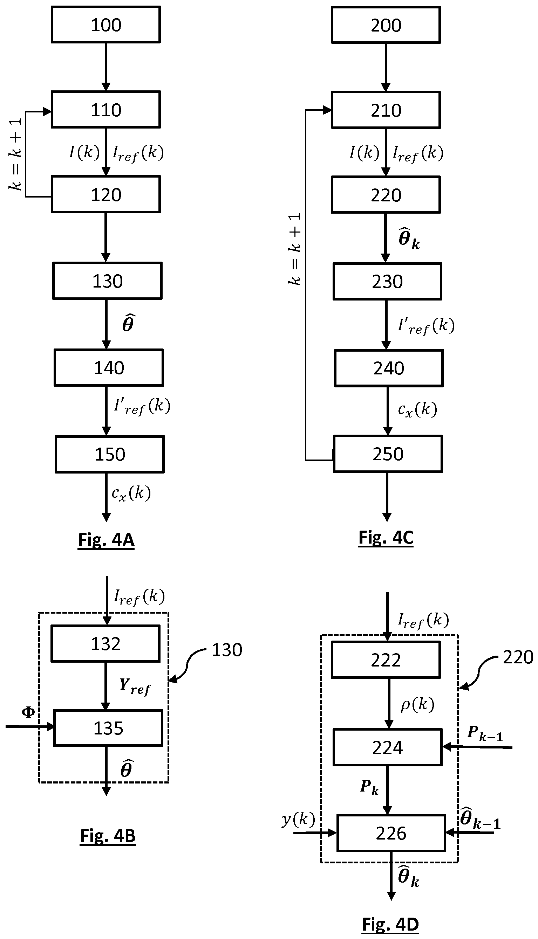

A cet effet, le dispositif comporte un premier processeur 30, par exemple un microprocesseur ou un microcontrôleur. Ce dernier est configuré pour recevoir un signal représentatif de l'intensité $I_{ref}(k)$ de l'onde lumineuse de référence $12_{ref}$, mesurée par le photodétecteur de référence $20_{ref}$ à chaque instant de mesure $k$, et pour mettre en œuvre un procédé afin d'obtenir une intensité de référence corrigée $I'_{ref}(k)$. Le procédé de correction est décrit par la suite, en lien avec les figures 4A à 4D. Le premier processeur 30 est relié à une mémoire 32 comportant des instructions permettant la mise en œuvre de certaines étapes de ce procédé. Les premier et deuxième processeurs peuvent être confondus.

Le dispositif comporte également un deuxième processeur 30' configuré pour recevoir un signal représentatif d'une intensité de mesure $I(k)$ ainsi que l'intensité de référence corrigée $I'_{ref}(k)$. Le deuxième processeur est programmé pour déterminer, en fonction de ces intensités, la quantité de l'espèce gazeuse mesurée à chaque instant de mesure.

On a mis en œuvre des dispositifs tels que celui représenté sur la figure 1 pour mesurer une concentration de dioxyde de carbone. Le filtre optique 18 définit une bande spectrale de détection de largeur 160 nm autour de la longueur d'onde 4.26 µm. Quatre dispositifs ont été utilisés, en utilisant des sources de lumière respectivement portées à des potentiels différents V1, V2, V3 et V4, avec V1>V2>V3>V4. On a mesuré l'évolution, au cours du temps, de l'intensité de référence $I_{ref}$ et de l'intensité de mesure $I$. Les mesures ont été effectuées à différents instants $k$, entre un instant initial $k = 0$ et un instant $k = K$, avec $K = 2.6\ 10^7$. L'indice $k$ est un indice temporel, et désigne une impulsion lumineuse émise à un instant de mesure $k$. Ces mesures permettent d'observer le vieillissement de la source de lumière 11 durant une plage temporelle de $2.6\ 10^7$ impulsions, soit 2166 heures, soit environ 90 jours. Chaque impulsion lumineuse s'étend selon une durée de 150 ms, la fréquence d'impulsion étant d'une impulsion toutes les 300 ms, soit 1/0,3 Hz. Le photodétecteur de mesure 20 et le photodétecteur de référence $20_{ref}$ sont formés par une thermopile Heimann Sensor, référence HCM Cx2 Fx. L'intensité mesurée de chaque impulsion est ici exprimée selon une unité de tension, correspondant à la tension aux bornes de la thermopile.

La figure 2A montre les mesures de l'intensité de l'onde lumineuse de référence $I_{ref}$ détectée, dans chaque configuration, par le photodétecteur de référence. On observe que plus le potentiel auquel est portée la source de lumière 11 est élevé, plus l'intensité de l'onde lumineuse de référence $12_{ref}$ décroît progressivement, entre une valeur initiale $I_{ref}(k = 0)$ et une valeur finale $I_{ref}(k = K)$. Cet effet est particulièrement visible sur les courbes correspondant aux potentiels les plus élevés V1 et V2. Quel que soit le potentiel de la source, on observe également des fluctuations importantes affectant l'intensité de référence mesurée par le photodétecteur de référence.

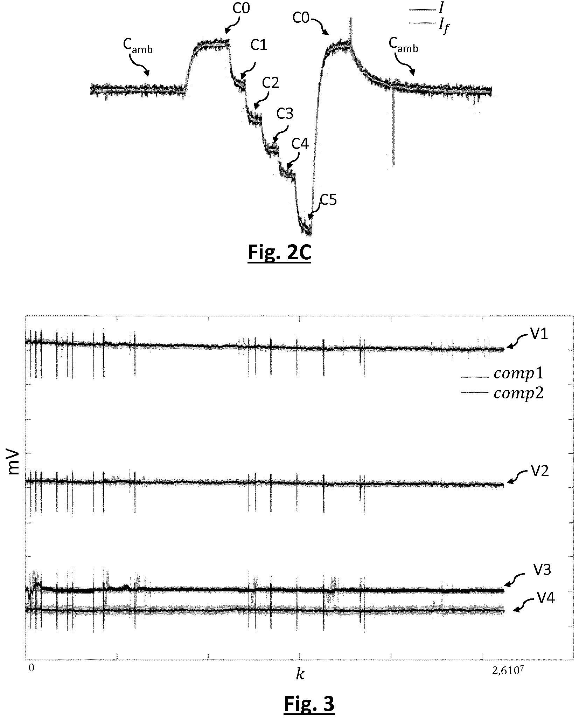

La figure 2B montre des évolutions temporelles de l'intensité de mesure I, détectée, dans chaque configuration, par le photodétecteur de mesure 20. On observe également le vieillissement progressif de la source de lumière 11, se traduisant par une diminution de l'intensité de mesure entre l'instant initial $k = 0$ et l'instant final $k = K$. Ces essais ont été réalisés en grande partie en analysant de l'air ambiant, la concentration en dioxyde de carbone étant la concentration ambiante $C_{amb}$. Quelques séries de mesures ponctuelles ont été réalisées en faisant varier la concentration en dioxyde de carbone. Ces mesures ponctuelles se traduisent par des fluctuations apparaissant sur les courbes de la figure 2B. Une de ces fluctuations est entourée par un contour en pointillés et est détaillée sur la figure 2C. Au cours de la série de mesures représentée sur la figure 2C, la concentration en dioxyde de carbone a été portée successivement à C0 = 0%, puis à aux concentrations C1 = 500 ppm, C2 = 1000 ppm, C3 = 1500 ppm, C4 = 2000 ppm, C5 = 3000 ppm, puis à nouveau la concentration C0. Lorsque la concentration passe de la concentration ambiante $C_{amb}$ (de l'ordre de 400 ppm) à C0, l'onde lumineuse incidente 12 est moins atténuée, ce qui se traduit par une augmentation de l'intensité de mesure $I$. Plus la concentration en dioxyde de carbone augmente, plus l'intensité de mesure diminue, ce qui se traduit par l'atteinte de paliers correspondant respectivement aux concentrations C1 à C5. L'intensité de mesure fournie par le photodétecteur de mesure correspond à la courbe $I$ de cette figure. Les fluctuations statistiques peuvent être amoindries par application d'un filtrage médian, de façon à obtenir une intensité filtrée $I_f$ permettant de conserver l'information utile tout en atténuant les principales fluctuations de l'intensité mesurée.

La décroissance progressive de l'intensité de mesure peut être corrigée par une prise en compte de l'intensité de référence. Une fonction de compensation *comp* peut ainsi être appliquée à l'intensité de mesure, de préférence après application d'un filtre médian, de telle sorte qu'à chaque instant de mesure $k$,

$$comp(I(k)) = I_f(k) - \frac{I_f(k=0)}{I_{ref,f}(k=0)} \times \left( I_{ref,f}(k) - I_{ref,f}(k = 0) \right) (2),$$

$I_{ref,f}$ représentant l'intensité de référence après application d'un filtrage médian sur cinq échantillons successifs.

A partir des courbes représentées sur les figures 2A et 2B, les courbes *comp*1 de la figure 3 représentent l'intensité de mesure corrigée selon l'expression (2) pour chaque potentiel V1, V2, V3 et V4. En comparant les courbes *comp*1 aux courbes représentées sur la figure 2B, on constate que que la prise en compte de l'intensité de référence et l'application de filtres simples, tel un filtre médian, permet une correction efficace de l'intensité mesurée. Les courbes *comp*2 de la figure 3 sont décrites ci-après.

Les inventeurs ont cherché à optimiser la prise en compte de l'intensité de référence, de façon à limiter davantage les fluctuations affectant cette dernière. Ils ont tiré parti du fait que contrairement à l'intensité de mesure, dont certaines fluctuations sont dues à des variations non modélisables de concentrations de l'espèce gazeuse analysée, l'évolution de l'intensité de référence peut être modélisée par un modèle paramétrique prédéterminé. Si θ est un vecteur comportant les paramètres du modèle, la détermination de θ permet une estimation débruitée de l'intensité de référence $I_{ref}$.

Un premier mode de réalisation de l'invention est schématisé sur les figures 4A et 4B.

Etape 100 : sélection du modèle.

Au cours de cette étape, on sélectionne un modèle paramétrique. Dans cet exemple, l'évolution de l'intensité de référence $I_{ref}$ est basée selon un modèle linéaire de type $I_{ref}(k) = ak + b$. (3)

$k$ correspond à un incrément temporel ;

$a$ et $b$ sont des réels formant le vecteur de paramètres θ.

Etape 110 : acquisition des mesures.

Au cours de cette étape, l'intensité de mesure $I(k)$ et l'intensité de référence $I_{ref}(k)$ sont acquises à chaque instant de mesure $k$.

Etape 120 : réitération de l'étape 110 ou arrêt de l'itération.

L'étape 110 est réitérée jusqu'à l'atteinte d'un nombre $N_k$ d'itérations. Dans cet exemple, $N_k = K = 2{,}6.10^7$ itérations, ce qui signifie qu'un seul vecteur de paramètres $\theta$ est formé pour l'ensemble des mesures effectuées. De façon alternative, le vecteur de paramètres $\theta$ du modèle peut être renouvelé plus souvent, par exemple tous les $N_k$=100000 itérations. La réduction de la plage temporelle $\Delta k$ considérée pour établir le vecteur de paramètre $\theta$ peut permettre de réduire l'incertitude du modèle par rapport aux mesures, comme décrit par la suite.

Etape 130 : estimation du vecteur de paramètres $\hat{\theta}$.

Cette étape est détaillée sur la figure 4B. Elle comporte la formation d'un vecteur de référence $\boldsymbol{Y_{ref}}$ (sous-étape 132) de dimension ($N_k$,1), et dont chaque terme correspond à une mesure de l'intensité de référence $I_{ref}(k)$, de telle sorte que $\boldsymbol{Y_{ref}}(k) = I_{ref}(k)$. Elle prend également en compte une matrice d'observation $\Phi$, de telle sorte que

$$\Phi = \begin{bmatrix} 1 & 1 \\ \vdots & \vdots \\ k & 1 \\ \vdots & \vdots \\ K & 1 \end{bmatrix}$$

$\Phi$ est une matrice de dimension ($N_k$, 2 ), avec, dans cet exemple, $N_k = K$. La première colonne est formé par l'ensemble des incréments temporels $k$ pris dans l'ordre croissant, la deuxième colonne étant formée de 1.

Le modèle considéré étant linéaire, il peut être écrit selon l'expression matricielle suivante : $\boldsymbol{Y_{ref}} = \Phi . \theta + \varepsilon$ (4), où :

- $\theta$ est le vecteur de paramètres, de dimension (2,1), avec $\boldsymbol{\theta} = \begin{bmatrix} a \\ b \end{bmatrix}$
- $\varepsilon$ est un vecteur d'erreur, de dimension ($N_k$, 1 ).

Le vecteur de paramètres $\hat{\theta}$ peut être estimé en minimisant la norme quadratique du vecteur d'erreur $\varepsilon$, ce qui peut être exprimé selon l'expression suivante :

$$\widehat{\boldsymbol{\theta}} = \min_{\boldsymbol{\theta}}\left(\boldsymbol{\varepsilon}^T \boldsymbol{\varepsilon}\right) = \left(\boldsymbol{\Phi}^T \boldsymbol{\Phi}\right)^{-1} \boldsymbol{\Phi}^T Y_{ref} \ (5)$$

Cette estimation fait l'objet de la sous-étape 135.

Etape 140 : Correction de l'intensité de référence.

Au cours de cette étape, le modèle est pris en compte pour corriger l'intensité de référence $I_{ref}(k)$, de façon à obtenir une intensité de référence corrigée $I'_{ref}(k)$. La correction consiste à remplacer l'intensité de référence par une application du modèle selon l'expression :

$$I'_{ref}(k) = ak + b \ (6).$$

$a$ et $b$ sont les termes du vecteur $\hat{\theta}$.

D'un point de vue matriciel, cela revient à former un vecteur de référence corrigé $\boldsymbol{Y'_{ref}}$, de dimension ($N_k$, 1 ), dont chaque terme est $I'_{ref}(k)$, avec $\boldsymbol{Y'_{ref}} = \Phi\hat{\theta}$ (6')

Etape 150 : Estimation de la quantité de l'espèce gazeuse $c_x(k)$ analysée.

Cette estimation est réalisée en estimant, à partir de $I'_{ref}(k)$, l'intensité $I_x(k)$ parvenant au photodétecteur de mesure 20 en l'absence de gaz, dans la bande spectrale d'absorption $\Delta_x$. Le calcul du ratio $\frac{I(k)}{I_x(k)}$ permet d'obtenir la quantité $c_x(k)$ comme précédemment indiqué.

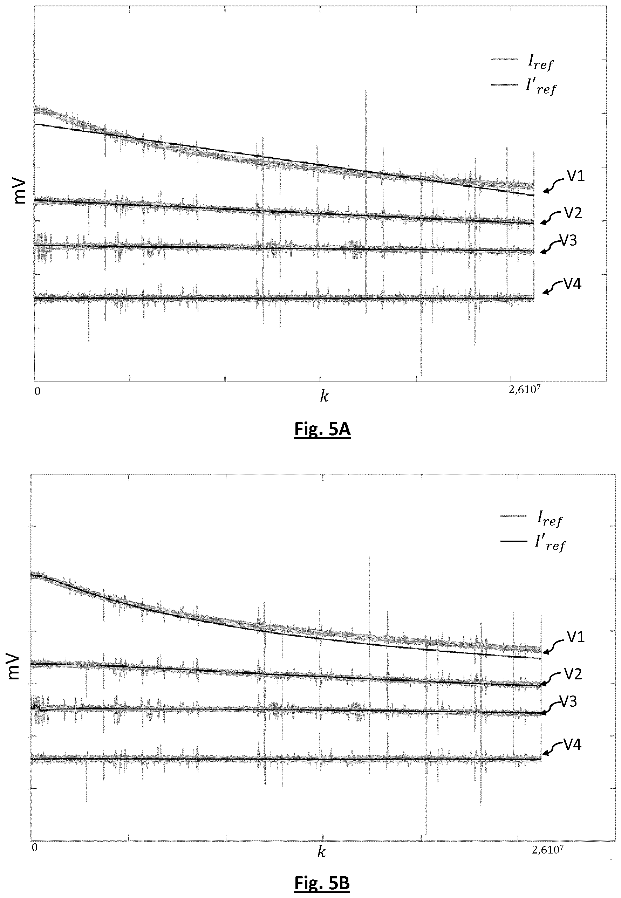

La figure 5A représente, pour différents potentiels auxquels est portée la source de lumière, l'intensité de référence mesurée $I_{ref}$ et l'intensité de référence corrigée $I'_{ref}$ selon le procédé décrit en lien avec les étapes 100 à 150. L'intensité de référence corrigée $I'_{ref}$ n'est pas soumise à des fluctuations statistiques. De plus, sur les courbes correspondant respectivement aux potentiels V2, V3 à V4, elle décrit fidèlement l'évolution temporelle de l'intensité de référence

$I_{ref}$. Lorsque la décroissance de l'intensité de référence $I_{ref}$ est plus prononcée, ce qui se produit lorsque la source de lumière est soumise à un potentiel élevé (courbe V1), la correction peut être améliorée en réduisant la plage temporelle $\Delta k$ prise en compte pour établir le modèle. L'intensité de référence est alors approximée par un modèle de type linéaire par parties, la durée de chaque partie correspondant à une plage temporelle $\Delta k$. Chaque partie peut alors faire l'objet d'une estimation d'un vecteur de paramètres, selon les étapes 100 à 150.

De façon complémentaire ou alternative, la précision du modèle peut être améliorée par la prise en compte d'un facteur de pondération, ou facteur d'oubli $\lambda$, associé à chaque incrément temporel $k$, avec $\lambda \in ]0,1]$, le facteur d'oubli étant de préférence compris entre 0 et 1. Le facteur d'oubli considéré permet de former une matrice de pondération $W$, de dimension $(N_k, N_k)$ telle que :

$$W = \begin{bmatrix} \lambda^{N_k-1} & 0 & 0 \\ 0 & \lambda^{k-1} & 0 \\ 0 & 0 & \lambda^0 \end{bmatrix}$$

La matrice de pondération permet de former un vecteur d'erreur $\varepsilon_W$ tel que $\varepsilon_W = \varepsilon.W$. Le vecteur de paramètres $\hat{\theta}$ minimisant le vecteur d'erreur $\varepsilon_W$ est tel que :

$$\hat{\theta} = \left(\Phi^T W^T W \Phi\right)^{-1} \Phi^T W^T W Y_{ref} \quad (7)$$

Lorsque $\lambda = 1$, l'équation (7) est équivalente à l'équation (5).

Un inconvénient du procédé décrit en lien avec les étapes 100 à 150, avec ou sans application d'une matrice de pondération, est qu'il s'agit d'un procédé appliqué a postériori, lorsqu'on dispose du vecteur d'observation $Y_{ref}$. Cela suppose la réalisation d'un nombre important de mesures avant d'obtenir les intensités de référence corrigées. La correction de l'intensité de référence n'est donc pas réalisée en temps réel. Un autre inconvénient est la mise en œuvre de calculs matriciels complexes, décrits dans les expressions (5) ou (7), impliquant des inversions de matrices. Un mode de réalisation ne présentant pas ces inconvénients est représenté sur les figures 4C et 4D.

Etape 200 : sélection du modèle.

Cette étape est similaire à l'étape 100 précédemment décrite. Dans cet exemple, l'évolution de l'intensité de référence $I_{ref}$ est basée selon un modèle linéaire de type $I_{ref}(k) = a_k k + b_k$. (8)

- k correspond à un incrément temporel ;

- $a_k$ et $b_k$ sont des réels formant le vecteur de paramètres $\theta_k$: $\quad \theta_k = \begin{bmatrix} a_k \\ b_k \end{bmatrix}$

A chaque incrément temporel $k$, c'est-à-dire à chaque instant de mesure, est associé un vecteur de paramètres $\theta_k$.

Etape 210 : acquisition d'une mesure.

Au cours de cette étape, l'intensité de mesure $I(k)$ et l'intensité de référence $I_{ref}(k)$ sont acquises à un instant de mesure $k$.

Etape 220 : mise à jour du vecteur de paramètres $\theta_k$ correspondant à l'instant de mesure $k$.

A la différence du procédé décrit en lien avec les étapes 100 à 150, le vecteur de paramètres $\theta_k$ est mis à jour à chaque instant de mesure $k$, selon une approche dite récursive, mettant en œuvre l'expression suivante :

$$\hat{\theta}_k = \hat{\theta}_{k-1} + P_k \rho_k [y_k - \rho_k^T \hat{\theta}_{k-1}] \quad (9)$$

où:

- $\rho_k$ est un vecteur de dimension [2, 1] avec $\quad \rho_k = \begin{bmatrix} k \\ 1 \end{bmatrix}$. Chaque vecteur $\rho_k$ est tel que sa transposée $\rho_k^T$ correspond à la $k^{\text{ième}}$ ligne de la matrice d'observation $\Phi$ préalablement décrite en lien avec l'étape 130.

- $y_k$ est un scalaire correspondant à la mesure $I_{ref}(k)$ ;

- $P_k$ est une matrice de dimension (2,2) mise à jour à chaque incrément temporel $k$ selon l'expression:

$$P_k = P_{k-1} - \frac{P_{k-1}\rho_k\rho_k^T P_{k-1}}{1+\rho_k^T P_{k-1}\rho_k}$$ (10). Lors de la première itération $(k = 1)$, on considère une matrice initiale $P_0$,

avec par exemple $$P_0 = \begin{bmatrix} 1 & 0 \\ 0 & 1 \end{bmatrix}$$ .

Si $\Phi_k$ désigne la matrice d'observation à l'instant $k$, de dimension $[k, 2]$, $$\Phi_k = \begin{bmatrix} 1 & 1 \\ \vdots & \vdots \\ k & 1 \end{bmatrix} ,$$

$P_k = (\Phi_k^T.\Phi_k)^{-1}$. $P_k$ correspond à l'inverse de la matrice d'autocorrélation de la matrice d'observation $\Phi_k$.

$P_k$ et $\rho_k$ sont des grandeurs actualisées à chaque instant de mesure $k$ et permettant l'estimation $\hat{\theta}_k$ du vecteur de paramètres du modèle audit instant.

Ce mode de réalisation est particulièrement intéressant car il permet d'exprimer la matrice $P_k$ en fonction de l'expression $P_{k-1}$ de cette matrice lors d'une itération précédente $k-1$, en utilisant l'équation (10). Cela ne nécessite pas l'inversion matricielle qu'implique le mode de réalisation précédent, comme on peut le voir sur l'équation (5).

Lors de la première itération, l'expression (9) est mise en œuvre en considérant un vecteur initial de paramètres

$\hat{\theta}_0$ arbitraire, par exemple $$\widehat{\theta}_0 = \begin{bmatrix} 1 \\ I_{ref}(k = 0) \end{bmatrix}$$ , $k = 0$ désignant un instant de mesure initial.

L'étape 220 est décrite sur la figure 4D. Elle comporte :

- une sous-étape 222 de formation du vecteur $\rho_k$ à partir de la mesure $I_{ref}(k)$ ;
- une sous-étape 224 de mise à jour de la matrice $P_k$ en mettant en œuvre l'expression (10) à partir de la matrice $P_{k-1}$ issue d'une itération précédente ou, lors de la première itération, de la matrice initialisée $P_0$;
- une sous-étape 226 d'estimation du vecteur de paramètres $\hat{\theta}_k$ par l'expression (9) à partir du vecteur $\hat{\theta}_{k-1}$ issu d'une itération précédente ou, lors de la première itération ($k=1$), du vecteur initialisé $\theta_0$.

Etape 230 : Correction de l'intensité de référence.

Le modèle paramétré lors de l'étape 220 est pris en compte pour corriger l'intensité de référence $I_{ref}(k)$, de façon à obtenir une intensité de référence corrigée $I'_{ref}(k)$. La correction consiste à remplacer l'intensité de référence par une application du modèle selon l'expression :

$$I'_{ref}(k) = \rho_k\widehat{\theta}_k = a_k k + b_k. \ (11)$$

Etape 240 : Estimation de la quantité de l'espèce gazeuse $c_x(k)$ analysée.

Cette estimation est réalisée à partir de $I'_{ref}(k)$ et de $I(k)$, de manière analogue à l'étape 150 précédemment décrite.

Etape 250 : réitération des étapes 210 à 240 ou arrêt de l'itération. Les étapes 210 à 240 sont réitérées jusqu'à l'atteinte d'un nombre $N_k$ d'itérations. Dans cet exemple, $N_k = K = 2,6.10^7$ itérations.

Ce mode de réalisation est dit récursif car il utilise des grandeurs $P_{k-1}$ et $\hat{\theta}_{k-1}$ issues de l'itération précédente ou, lors de la première itération, de grandeurs initialisées. Le vecteur de paramètres $\hat{\theta}_k$ est mis à jour à chaque itération, ce qui permet sa prise en compte, à chaque itération, pour corriger l'intensité de référence $I_{ref}(k)$ et obtenir la concentration de l'espèce gazeuse $c_x(k)$ recherchée.

Contrairement au mode de réalisation décrit en lien avec les étapes 100 à 150, il n'est pas nécessaire d'attendre qu'un nombre $N_k$ d'itérations aient été effectuées pour estimer les paramètres du modèle. Cela permet de disposer d'une correction en temps réel de l'intensité de référence, et donc une détermination en temps réel de la quantité recherchée de l'espèce gazeuse. De plus, les formules de mises à jour décrites dans l'étape 220 sont simples à mettre en œuvre et peu consommatrices de mémoire.

Selon une variante de ce mode de réalisation, un terme de pondération, ou facteur d'oubli $\lambda$, peut être prévu, de manière à pondérer la prise en compte de l'itération précédente. Selon cette variante, l'expression (10) est remplacée par :

$$P_k = \frac{1}{\lambda}\left(P_{k-1} - \frac{P_{k-1}\rho_k\rho_k^T P_{k-1}}{\lambda + \rho_k^T P_{k-1}\rho_k}\right)(12)$$

$\lambda$ est un terme de pondération avec $\lambda \in \, ]0,1]$. Par exemple $\lambda = 0.99$.

Lorsque $\lambda = 1$, l'équation (12) est équivalente l'équation (10).

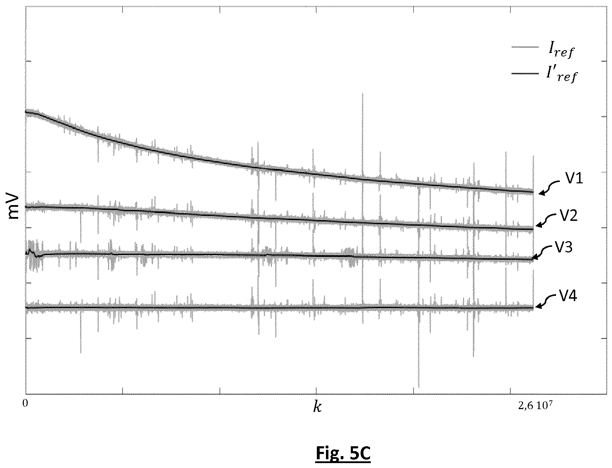

Les figures 5B et 5C représentent respectivement, pour les différents potentiels auxquels est portée la source lumineuse 11, des mesures de l'intensité de référence $I_{ref}(k)$ ainsi que des valeurs corrigées $I'_{ref}(k)$ de l'intensité de référence résultant de l'application du modèle récursif sans et avec prise en compte du terme de pondération. Comme observé sur la figure 5A, la prise en compte d'un modèle permet de s'affranchir des fluctuations affectant l'intensité de référence $I_{ref}$. Comparativement au modèle linéaire non récursif, dont les performances sont représentées sur la figure 5A, le modèle récursif permet une meilleure approximation de l'intensité de référence et s'adapte à des évolutions non linéaires de ladite intensité. La prise en compte d'un facteur de pondération permet d'obtenir des performances optimales. En effet, sur la figure 5C, on observe que quel que soit la valeur du potentiel auquel a été portée la source de lumière, l'intensité de référence corrigée $I'_{ref}$ est peu bruitée et ne présente pas de biais par rapport à l'intensité de référence mesurée $I_{ref}$. Cet effet est particulièrement visible sur la courbe correspondant au potentiel V1.

La courbe *comp2* de figure 3 représente une compensation de l'intensité mesurée par le photodétecteur en mettant en œuvre l'intensité de référence corrigée par l'estimation récursive avec prise en compte du facteur d'oubli $\lambda$ = 0. 99, selon l'expression :

$$comp(I(k)) = I_f(k) - \frac{I_f(k=0)}{I'_{ref}(k=0)} \times \left( I'_{ref}(k) - I'_{ref}(k=0) \right) \; (2').$$

On observe que l'intensité ainsi compensée ne présente pas de fluctuations significatives, les fluctuations résiduelles correspondant aux séries de mesures décrites en lien avec la figure 2C. La comparaison des courbes *comp2* et *comp1* permet d'apprécier l'effet de la réduction des fluctuations apporté par l'invention.

L'invention pourra être mise en œuvre sur des processeurs pour le traitement de données mesurées par des capteurs de gaz, pour des applications dans le contrôle de l'environnement, mais également dans des applications liées à la mesure de gaz dans des environnements industriels ou dans des applications médicales.

**Revendications**

1. Procédé de mesure d'une quantité ($c_x$) d'une espèce gazeuse ($G_x$) présente dans un gaz, l'espèce gazeuse étant apte à absorber une lumière dans une bande spectrale d'absorption ($\Delta_x$), le procédé comportant les étapes suivantes :

   a) disposition du gaz entre une source de lumière (11) et un photodétecteur de mesure (20), la source de lumière (11) étant apte à émettre une onde lumineuse incidente (12), l'onde lumineuse incidente se propageant à travers le gaz vers le photodétecteur de mesure (20), le photodétecteur de mesure étant apte à détecter une onde lumineuse (14) transmise par le gaz, dans la bande spectrale d'absorption ;
   b) illumination du gaz (G) par la source de lumière (11) ;
   c) mesure, par le photodétecteur de mesure (20), d'une intensité ($I(k)$), dite intensité de mesure, de l'onde lumineuse transmise par le gaz, dans la bande spectrale d'absorption;
   d) mesure, par un photodétecteur de référence ($20_{ref}$), d'une intensité ($I_{ref}(k)$), dite intensité de référence, d'une onde lumineuse ($12_{ref}$) dite de référence, l'onde lumineuse de référence étant émise par la source de lumière (11) dans une bande spectrale de référence ($\Delta_{ref}$);

   les étapes b) à d) étant mises en œuvre à une pluralité d'instants de mesure (1 ... *K*), le procédé comportant également les étapes suivantes :

   e) correction de l'intensité de référence ($I_{ref}(k)$) détectée aux différents instants de mesure;
   f) estimation d'une quantité ($c_x(k)$) de l'espèce gazeuse ($G_x$), aux différents instants de mesure, à partir de l'intensité de référence $(I'_{ref}(k))$ corrigée lors de l'étape e) et de l'intensité de mesure ($I(k)$) résultant de l'étape c);

   le procédé étant **caractérisé en ce que** l'étape e) comporte les sous-étapes suivantes :

   ei) prise en compte d'un modèle paramétrique, défini selon des paramètres $(\hat{\theta}, \hat{\theta}_k)$, modélisant une évolution temporelle de l'intensité de référence ($I_{ref}(k)$) détectée aux différents instants de mesure, l'évolution temporelle traduisant une décroissance de l'intensité de référence ;

eii) estimation des paramètres $(\hat{\theta}, \hat{\theta}_k)$ du modèle à l'aide des intensités de référence mesurées aux différents instants de mesure ;

eiii) estimation d'une intensité de référence dite corrigée ($I'_{ref}(k)$) à chaque instant de mesure en fonction des paramètres $(\hat{\theta}, \hat{\theta}_k)$ estimés du modèle.

2. Procédé selon la revendication 1, dans lequel lors de l'étape ei), le modèle pris en compte est un modèle linéaire, l'étape eii) formant une régression linéaire.

3. Procédé selon l'une quelconque des revendications 1 ou 2, dans lequel les étapes b) à d) sont réalisées à différents instants de mesure ($k$) formant une plage temporelle ($\Delta k$), et dans lequel, suite à ces instants de mesure :

   - lors de la sous-étape ei), le modèle est pris en compte pour la plage temporelle ;
   - lors de la sous-étape eii), les paramètres du modèle sont estimés à l'aide de mesures de référence ($I_{ref}(k)$) effectuées durant ladite plage temporelle ;
   - lors de la sous-étape eiii), l'intensité lumineuse de référence corrigée ($I'_{ref}(k)$) est estimée pour les instants de mesure de la plage temporelle.

4. Procédé selon la revendication 3, dans lequel lors de la sous-étape eii), chaque instant ($k$) de la plage temporelle ($\Delta k$) est affecté un terme de pondération ($\lambda^k$) strictement positif et inférieur ou égal à 1.

5. Procédé selon l'une quelconque des revendications 1 ou 2, dans lequel les sous-étapes eii) et eiii) sont mises en œuvre pour chaque instant de mesure (k), de façon itérative, les paramètres du modèle ($\theta_k$) étant mis à jour en fonction de paramètres du modèle ($\theta_{k-1}$) résultant d'une itération précédente, ou, lors d'un premier instant de mesure, de paramètres initialisés ($\theta_0$).

6. Procédé selon la revendication 5, dans lequel les étapes e) et f) sont mises en œuvre à chaque instant de mesure.

7. Procédé selon la revendication 5, dans lequel la sous-étape eii) comporte la prise en compte d'un terme de pondération ($\lambda$) strictement positif et inférieur ou égal à 1 pour pondérer la prise en compte de l'itération précédente.

8. Procédé selon l'une quelconque des revendications précédentes, dans lequel l'étape f) comporte les sous-étapes suivantes :

   fi) à partir de l'intensité de référence corrigée ($I'_{ref}(k)$), à chaque instant de mesure, estimation d'une intensité de l'onde lumineuse ($I_x(k)$) émise par la source de lumière, dans la bande spectrale d'absorption, audit instant de mesure (k);

   fii) comparaison de l'intensité ($I_x(k)$) ainsi estimée avec l'intensité de mesure ($I(k)$) résultant de l'étape c), audit instant de mesure ($k$);

   fiii) estimation de la quantité ($c_x(k)$) de l'espèce gazeuse en fonction de la comparaison réalisée lors de la sous-étape fii).

9. Dispositif (1) pour déterminer une quantité ($c_x(k)$) d'une espèce gazeuse ($G_x$) dans un gaz ($G$), le dispositif comportant :

   - une source lumineuse (11) arrangée pour émettre une onde lumineuse incidente (12) se propageant vers le gaz ($G$), l'onde lumineuse incidente s'étendant dans une bande spectrale d'absorption ($\Delta_x$) de l'espèce gazeuse ($G_x$);
   - un photodétecteur de mesure (20), configuré pour détecter une onde lumineuse transmise (14) par le gaz, à différents instants de mesure $(k)$, et à en mesurer une intensité (($I(k)$), dite intensité de mesure;
   - un photodétecteur de référence ($20_{ref}$), configuré pour mesurer une intensité (($I_{ref}(k)$), dite intensité de référence, d'une onde lumineuse de référence ($12_{ref}$) émise par la source de lumière (11), aux différents instants de mesure (k);
   - un premier processeur (30), configuré pour calculer une intensité de référence corrigée ($I'_{ref}(k)$) aux différents instants de mesure, à partir de l'intensité de référence (($I_{ref}(k)$)) mesurée par le photodétecteur de référence ($20_{ref}$) auxdits instants de mesure, le premier processeur étant configuré pour mettre en œuvre l'étape e) comportant les sous-étapes ei) à eiii) du procédé objet de l'une quelconque des revendications 1 à 8 ;
   - un deuxième processeur (30') configuré pour estimer la quantité de l'espèce gazeuse ($c_x(k)$), à chaque instant de mesure, en fonction de l'intensité de référence corrigée ($I'_{ref}(k)$) et de l'intensité de mesure ($I(k)$), le deuxième processeur étant configuré pour mettre en œuvre l'étape f) du procédé objet de l'une quelconque des revendications 1 à 8.

**Patentansprüche**

1. Verfahren zur Messung einer Menge ($c_x$) einer Gasspezies ($G_x$), die in einem Gas vorhanden ist, wobei die Gasspezies geeignet ist, ein Licht in einem Absorptionsspektralband ($\Delta_x$) zu absorbieren, wobei das Verfahren die folgenden Schritte aufweist:

   a) Anordnen des Gases zwischen einer Lichtquelle (11) und einem Messphotodetektor (20), wobei die Lichtquelle (11) geeignet ist, eine einfallende Lichtwelle (12) zu emittieren, wobei sich die einfallende Lichtwelle durch das Gas zum Messphotodetektor (20) hin ausbreitet, wobei der Messphotodetektor geeignet ist, eine durch das Gas übertragene Lichtwelle (14) im Absorptionsspektralband zu detektieren;
   b) Beleuchten des Gases (G) durch die Lichtquelle (11);
   c) Messen einer Messstärke ($I(k)$) der durch das Gas übertragenen Lichtwelle im Absorptionsspektralband durch den Messphotodetektor (20);
   d) Messen einer Referenzstärke ($I_{ref}(k)$) einer Referenzlichtwelle ($12_{ref}$) durch einen Referenzphotodetektor ($20_{ref}$), wobei die Referenzlichtwelle von der Lichtquelle (11) in einem Referenzspektralband ($\Delta_{ref}$) emittiert wird;

   wobei die Schritte b) bis d) zu mehreren Messzeitpunkten (1... *K*), durchgeführt werden, wobei das Verfahren ebenfalls die folgenden Schritte aufweist:

   e) Korrigieren der Referenzstärke ($I_{ref}(k)$), die zu den verschiedenen Messzeitpunkten detektiert wird;
   f) Schätzen einer Menge ($c_x(k)$) der Gasspezies ($G_x$) zu den verschiedenen Messzeitpunkten anhand der Referenzstärke ($I'_{ref}(k)$), die beim Schritt e) korrigiert wird, und der Messstärke ($I(k)$), die sich aus dem Schritt c) ergibt;

   wobei das Verfahren **dadurch gekennzeichnet ist, dass** der Schritt e) die folgenden Unterschritte aufweist:

   ei) Berücksichtigen eines Parametermodells, das gemäß Parametern ($\hat{\theta}, \hat{\theta}_k$) definiert ist, das eine zeitliche Entwicklung der Referenzstärke ($I_{ref}(k)$) modelliert, die zu den verschiedenen Messzeitpunkten detektiert wird, wobei die zeitliche Entwicklung eine Abnahme der Referenzstärke wiedergibt;
   eii) Schätzen der Parameter ($\hat{\theta}, \hat{\theta}_k$) des Modells mithilfe der Referenzstärken, die zu den verschiedenen Messzeitpunkten gemessen werden;
   eiii) Schätzen einer korrigierten Referenzstärke ($I'_{ref}(k)$) zu jedem Messzeitpunkt in Abhängigkeit von den geschätzten Parametern ($\hat{\theta}, \hat{\theta}_k$) des Modells.

2. erfahren nach Anspruch 1, wobei beim Schritt ei) das berücksichtigte Modell ein lineares Modell ist, wobei der Schritt eii) eine lineare Regression bildet.

3. Verfahren nach einem der Ansprüche 1 oder 2, wobei die Schritte b) bis d) zu verschiedenen Messzeitpunkten (k) durchgeführt werden, die einen Zeitbereich ($\Delta k$) bilden, und wobei nach diesen Messzeitpunkten:

   - beim Unterschritt ei) das Modell für den Zeitbereich berücksichtigt wird;
   - beim Unterschritt eii) die Parameter des Modells mithilfe von Referenzmessungen ($I_{ref}(k)$) geschätzt werden, die während des Zeitbereichs durchgeführt werden;
   - beim Unterschritt eiii) die korrigierte Referenzlichtstärke ($I'_{ref}(k)$) für die Messzeitpunkte des Zeitbereichs geschätzt wird.

4. Verfahren nach Anspruch 3, wobei beim Unterschritt eii) jeder Zeitpunkt (k) des Zeitbereichs ($\Delta k$)ein streng positiver Gewichtungsterm ($\lambda^k$) kleiner als oder gleich 1 zugewiesen wird.

5. Verfahren nach einem der Ansprüche 1 oder 2, wobei die Unterschritte eii) und eiii) für jeden Messzeitpunkt (k) iterativ durchgeführt werden, wobei die Parameter des Modells ($\theta_k$) in Abhängigkeit von Parametern des Modells ($\theta_{k-1}$), die sich aus einer vorhergehenden Iteration ergeben, oder, bei einem ersten Messzeitpunkt, von initialisierten Parametern ($\theta_0$) aktualisiert werden.

**6.** Verfahren nach Anspruch 5, wobei die Schritte e) und f) zu jedem Messzeitpunkt durchgeführt werden.

**7.** Verfahren nach Anspruch 5, wobei der Unterschritt eii) das Berücksichtigen eines streng positiven Gewichtungsterms ($\lambda$) kleiner als oder gleich 1 aufweist, um die Berücksichtigung der vorhergehenden Iteration zu gewichten.

**8.** Verfahren nach einem der vorhergehenden Ansprüche, wobei der Schritt f) die folgenden Unterschritte aufweist:

fi) anhand der korrigierten Referenzstärke ($I'_{ref}(k)$) zu jedem Messzeitpunkt,
Schätzen einer Stärke der von der Lichtquelle emittierten Lichtwelle ($I_x(k)$) im Absorptionsspektralband zum Messzeitpunkt (k);
fii) Vergleichen der so geschätzten Stärke ($I_x(k)$) mit der Messstärke (I(k)), die sich aus dem Schritt c) ergibt, zum Messzeitpunkt (k);
fiii) Schätzen der Menge ($c_x(k)$) der Gasspezies in Abhängigkeit von dem Vergleich, der beim Unterschritt fii) durchgeführt wird.

**9.** Vorrichtung (1) zur Bestimmung einer Menge ($c_x(k)$) einer Gasspezies ($G_x$) in einem Gas (G), die Vorrichtung aufweisend:

- eine Lichtquelle (11) die angeordnet ist, eine einfallende Lichtwelle (12) zu emittieren, die sich zum Gas (G) hin ausbreitet, wobei sich die einfallende Lichtwelle in einem Absorptionsspektralband ($\Delta_x$) der Gasspezies ($G_x$) erstreckt;
- einen Messphotodetektor (20), der dazu ausgebildet ist, eine durch das Gas übertragene Lichtwelle (14) zu verschiedenen Messzeitpunkten (k) zu detektieren und davon eine Messstärke ((I(k)) zu messen;
- einen Referenzphotodetektor ($20_{ref}$), der dazu ausgebildet ist, eine Referenzstärke (($I_{ref}(k)$) einer Referenzlichtwelle (12ref), die von der Lichtquelle (11) emittiert wird, zu den verschiedenen Messzeitpunkten (k) zu messen;
- einen ersten Prozessor (30), der dazu ausgebildet ist, eine korrigierte Referenzstärke ($I'_{ref}(k)$) zu den verschiedenen Messzeitpunkten anhand der Referenzstärke (($I_{ref}(k)$)), die vom Referenzphotodetektor ($20_{ref}$) zu den Messzeitpunkten gemessen wird, zu berechnen, wobei der erste Prozessor dazu ausgebildet ist, den Schritt e) mit den Unterschritten ei) bis eiii) des Verfahrens nach einem der Ansprüche 1 bis 8 durchzuführen;
- einen zweiten Prozessor (30'), der dazu ausgebildet ist, die Menge der Gasspezies ($c_x(k)$) zu jedem Messzeitpunkt in Abhängigkeit von der korrigierten Referenzstärke ($I'_{ref}(k)$) und der Messstärke (I(k)) zu schätzen, wobei der zweite Prozessor dazu ausgebildet ist, den Schritt f) des Verfahrens nach einem der Ansprüche 1 bis 8 durchzuführen.

**Claims**

**1.** A method for measuring an amount ($c_x$) of a gaseous species ($G_x$) present in a gas, the gaseous species being able to absorb light in an absorption spectral band ($\Delta_x$), the method comprising the following steps:

a) placing the gas between a light source (11) and a measurement photodetector (20), the light source (11) being able to emit an incident light wave (12), the incident light wave propagating through the gas toward the measurement photodetector (20), the measurement photodetector being able to detect a light wave (14) transmitted by the gas, in the absorption spectral band;
b) illuminating the gas (G) with the light source (11);
c) measuring, with the measurement photodetector (20), an intensity ($I(k)$), called the measurement intensity, of the light wave transmitted by the gas, in the absorption spectral band;
d) measuring, with a reference photodetector (20ref), an intensity ($I_{ref}(k)$), called the reference intensity, of a light wave ($12_{ref}$), called the reference light wave, the reference light wave being emitted by the light source (11) in a reference spectral band ($\Delta_{ref}$);

steps b) to d) being implemented at a plurality of measurement times (1... $K$), the method also comprising the following steps:

e) correcting the reference intensity ($I_{ref}(k)$) detected at the various measurement times;

f) estimating an amount ($c_x(k)$) of the gaseous species ($G_x$), at the various measurement times, from the reference intensity $\left(I'_{ref}(k)\right)$ corrected in step e) and from the measurement intensity *(I(k))* resulting from step c);

the method being **characterized in that** step e) comprises the following substeps:

ei) taking into account a parametric model, defined using the parameters $(\hat{\theta}, \hat{\theta}_k)$, modelling a temporal variation in the reference intensity $(I_{ref}(k))$ detected at the various measurement times, the temporal variation expressing a decrease in the reference intensity;

eii) estimating the parameters $(\hat{\theta}, \hat{\theta}_k)$ of the model using the reference intensities measured at the various measurement times;

eiii) estimating a reference intensity called the corrected reference intensity $(I'_{ref}(k))$ at each measurement time depending on the estimated parameters $(\hat{\theta}, \hat{\theta}_k)$ of the model.

2. The method as claimed in claim 1, wherein, in step ei), the model taken into account is a linear model, step eii) forming a linear regression.

3. The method as claimed in either one of claims 1 and 2, wherein steps b) to d) are carried out at various measurement times *(k)* forming a time range *(Δk)*, and wherein, following these measurement times:

   - in substep ei), the model is taken into account for the time range;
   - in substep eii), the parameters of the model are estimated using reference measurements $(I_{ref}(k))$ carried out during said time range;
   - in substep eiii), the corrected reference light intensity $(I'_{ref}(k))$ is estimated for the measurement times of the time range.

4. The method as claimed in claim 3, wherein, in substep eii), each time *(k)* of the time range *(Δk)* is assigned a weighting term $(\lambda^k)$ that is strictly positive and lower than or equal to 1.

5. The method as claimed in either one of claims 1 and 2, wherein substeps eii) and eiii) are implemented for each measurement time *(k)*, iteratively, the parameters of the model $(\theta_k)$ being updated depending on parameters of the model $(\theta_{k-1})$ resulting from a preceding iteration, or, at a first measurement time, initialized parameters $(\theta_0)$.

6. The method as claimed in claim 5, wherein steps e) and f) are implemented at each measurement time.

7. The method as claimed in claim 5, wherein substep eii) comprises taking into account a weighting term $(\lambda)$ that is strictly positive and lower than or equal to 1 to weight to what extent the preceding iteration is taken into account.

8. The method as claimed in any one of the preceding claims, wherein step f) comprises the following substeps:

   fi) from the corrected reference intensity $(I'_{ref}(k))$, at each measurement time, estimating an intensity of the light wave $(I_x(k))$ emitted by the light source, in the absorption spectral band, at said measurement time *(k)*;
   fii) comparing the intensity $(I_x(k))$ thus estimated with the measurement intensity *(I(k))* resulting from step c), at said measurement time *(k)*;
   fiii) estimating the amount $(c_x(k))$ of the gaseous species depending on the comparison carried out in substep fii).

9. A device (1) for determining an amount $(c_x(k))$ of a gaseous species $(G_x)$ in a gas *(G)*, the device comprising:

   - a light source (11) configured to emit an incident light wave (12) that propagates toward the gas *(G)*, the incident light wave lying in an absorption spectral band $(\Delta_x)$ of the gaseous species $(G_x)$;
   - a measurement photodetector (20) configured to detect a light wave (14) transmitted by the gas, at various measurement times (k), and to measure an intensity *(I(k))* thereof called the measurement intensity;
   - a reference photodetector $(20_{ref})$ configured to measure an intensity $((I_{ref}(k))$, called the reference intensity, of a reference light wave $(12_{ref})$ emitted by the light source (11), at the various measurement times *(k)*;
   - a first processor (30), configured to compute a corrected reference intensity $(I'_{ref}(k))$ at the various measurement times, from the reference intensity $(I_{ref}(k))$ measured by the reference photodetector $(20_{ref})$ at said measurement times, the first processor being configured to implement step e) of the method that is the subject of any one of claims 1 to 8;
   - a second processor (30'), configured to estimate the amount of the gaseous species $(c_x(k))$, at each meas-

urement time, depending on the corrected reference intensity (($I'_{ref}(k)$)) and the measurement intensity ($I(k)$), the second processor being configured to implement step f) of the method that is the subject of any one of claims 1 to 8.

**Fig. 1**

**Fig. 2A**

**Fig. 2B**

**Fig. 2C**

**Fig. 3**

| 100 |

$\downarrow$

| 110 |

$k = k + 1$

$I(k) \quad I_{ref}(k)$

| 120 |

$\downarrow$

| 130 |

$\widehat{\boldsymbol{\theta}}$

| 140 |

$I'_{ref}(k)$

| 150 |

$c_x(k)$

**Fig. 4A**

| 200 |

$\downarrow$

| 210 |

$k = k + 1$

$I(k) \quad I_{ref}(k)$

| 220 |

$\widehat{\boldsymbol{\theta}}_k$

| 230 |

$I'_{ref}(k)$

| 240 |

$c_x(k)$

| 250 |

**Fig. 4C**

$I_{ref}(k)$

| 132 |

130

$\boldsymbol{Y_{ref}}$

$\Phi$

| 135 |

$\widehat{\boldsymbol{\theta}}$

**Fig. 4B**

$I_{ref}(k)$

| 222 |

220

$\rho(k)$

| 224 | $\quad \boldsymbol{P_{k-1}}$

$\boldsymbol{P_k}$

$y(k)$

| 226 | $\quad \widehat{\boldsymbol{\theta}}_{k-1}$

$\widehat{\boldsymbol{\theta}}_k$

**Fig. 4D**

**Fig. 5A**

**Fig. 5B**

**Fig. 5C**

EP 3 639 011 B1

RÉFÉRENCES CITÉES DANS LA DESCRIPTION

**Documents brevets cités dans la description**

- US 5026992 A
- WO 2007064370 A

**Littérature non-brevet citée dans la description**

- **WEI-LIN YE et al.** Design and performances of a mid-infrared CH4 détection device with novel three-channel-based LS-FTF self-adaptative denoising structure. *Sensors and actuators B: Chemical,* vol. 155 (1